# EUROPÄISCHE PATENTSCHRIFT

(11) **EP 4 367 072 B1**
(45) Veröffentlichungstag und Bekanntmachung des Hinweises auf die Patenterteilung: **23.04.2025**
(21) Anmeldenummer: 22744159.9
(22) Anmeldetag: 04.07.2022
(51) Int. Cl.: C03B 1/00, C03C 3/06, C03C 27/00, B32B 17/00, C03B 23/20

(54) **VERFAHREN ZUM STOFFSCHLÜSSIGEN VERBINDEN EINES GLASELEMENTS MIT EINEM TRÄGERELEMENT UND OPTISCHE VORRICHTUNG**
METHOD FOR INTEGRALLY BONDING A GLASS ELEMENT TO A SUPPORT ELEMENT, AND OPTICAL DEVICE
PROCÉDÉ DE LIAISON PAR LIAISON DE MATIÈRE D'UN ÉLÉMENT EN VERRE À UN ÉLÉMENT DE SUPPORT ET DISPOSITIF OPTIQUE

(30) Priorität: 08.07.2021 DE 102021117652
(43) Veröffentlichungstag der Anmeldung: 15.05.2024
(73) Patentinhaber: JENOPTIK Optical Systems GmbH, 07745 Jena (DE)
(72) Erfinder: HERGENHAN, Guido, 07745 Jena (DE); TAUBERT, Jochen, 07745 Jena (DE)
(74) Vertreter: Waldauf, Alexander
(86) Internationale Anmeldenummer: PCT/EP2022/068390
(87) Internationale Veröffentlichungsnummer: WO 2023/280751

(56) Entgegenhaltungen:
- JP-A- 2005 300 976
- US-A1- 2003 221 854

## Beschreibung

Der vorliegende Ansatz bezieht sich auf ein Verfahren zum stoffschlüssigen Verbinden eines Glaselements mit einem Trägerelement und auf eine optische Vorrichtung.

In der DE 10 2016 213 561 A1 wird ein Verfahren beschrieben, bei dem Materialien mit ähnlichen Ausdehnungskoeffizienten mittels Kleben, Löten oder Schweißen verbunden werden.

Aus JP2005300976A ist eine Verbindungsmethode für ein optisches Bauteil mit einem Trägerelement bekannt. Nachteilig ist, dass die Prozessstabilität des Verfahrens für bestimmte Materialkombinationen nicht gewährleistet ist.

Aus WO2006/034775A1 ist ein Verbundstruktur aus Nullausdehnungsmaterial und ein Verfahren zur Herstellung einer solchen bekannt, Nachteilig ist die Verwendung einer Kleberschicht. Diese kann durch Alterung zum Ausfall des Bauteils führen.

US 2003/221854 A1 offenbart eine Anordnung mit zwei Bindungselementen, wobei eines der Bindungselemente eine Ausnehmung aufweist, worin das andere Bindungselement eingebracht und anhand eines Bindemittels mit dem ersten Element verbunden ist.

### Offenbarung der Erfindung

Vor diesem Hintergrund wird mit dem vorliegenden Ansatz ein Verfahren zum stoffschlüssigen Verbinden eines Glaselements mit einem Trägerelement und eine optische Vorrichtung gemäß den Hauptansprüchen vorgestellt. Vorteilhafte Ausgestaltungen ergeben sich aus den jeweiligen Unteransprüchen und der nachfolgenden Beschreibung.

Für Aufgaben zum Beispiel in Positioniereinrichtungen oder hochgenauen Längen- oder Winkel- Messvorrichtungen werden ebene Glasflächen benötigt, die fest mit einem Keramikträger verbunden sind. Gleichzeitig können die Bauelemente während ihrer Prozessierung, Herstellung und ihres Transports Temperaturschwankungen ausgesetzt sein. Mit dem hier vorgestellten Ansatz kann eine feste und klebstofffreie Verbindung von Glas und Keramik realisiert werden, die auch nach prozess- oder transportbedingter Erwärmung im Betrieb bei Raumtemperatur oder einer anderen vorbestimmten Betriebstemperatur eine ebene Oberfläche aufweisen kann.

Es wird ein Verfahren zum stoffschlüssigen Verbinden eines Glaselements mit einem Trägerelement vorgestellt, wobei das Verfahren einen Schritt des Einbringens mindestens eines Kontaktelements in eine Kontaktausnehmung in einer Oberfläche des Trägerelements aufweist. Zudem umfasst das Verfahren einen Schritt des Aufsetzens des Glaselements auf einen über die Oberfläche ragenden Abschnitt des Kontaktelements und einen Schritt des lokalen Erhitzens des Kontaktelements, um das Glaselement über das Kontaktelement mit dem Trägerelement zu verbinden. Beispielsweise kann das Glaselement ein titandotiertes Quarzglas sein, welches zum Beispiel einen TiO₂-Anteil von ca. 20 Gew.-% oder weniger aufweisen kann. Zudem kann der mittlere lineare thermische Ausdehnungskoeffizient (CTE) des Glaselements zum Beispiel 0 ± 30 ppb/°C von 5°C bis 35°C mit einem Vertrauensniveau von 95% betragen (ppb Teile pro Milliarde). Dies ist beispielsweise bei einem sogenannten Ultra Low Expansion Glas der Fall. Bei dem Trägerelement kann es sich beispielsweise um einen Keramikträger, beispielsweise aus Siliziumcarbid (SiC), oder einen Metallträger handeln. Weitere Materialien des Trägerelements können zum Beispiel Ein- oder Polykristalline Festkörper, wie Silizium (Si), Germanium, Saphir, Diamant oder Quarzglas sein oder ein Gemisch aus Silizium und Siliziumkarbid (Si/SiC), insbesondere ein reaktionsgebundenes, siliziuminfiltriertes Siliziumkarbidmaterial, oder Borkarbid B4C oder siliziuminfiltriertes Borkarbid (SiB₄C) oder AlN oder Al₂O₃.Bei einem Verbinden des Glaselements mit dem Trägerelement, beispielsweise durch Kleben oder Löten, könnte jedweder organische Kleber seine stofftypischen schwindungs- und thermischen Ausdehnungseigenschaften in das steife und ausdehnungsarme Gefüge aus Siliziumcarbid und Glas mitbringen. Ein direktes Verschweißen insbesondere von Glas mit einem sehr geringen thermischen Wärmeausdehnungskoeffizienten, beispielsweise einem Ultra Low Expansion Glas, und Si/SiC-Keramik kann auf Grund von Kohlenmonoxidbildung und zusätzlich oder alternativ Kohledioxidbildung problematisch oder gar nicht durchführbar sein. Durch den mit diesem Verfahren vorgestellten Schritt des Einbringens wird darum zuerst ein Kontaktelement, das beispielsweise aus Glas ausgebildet sein und entsprechend auch als Glasdübel bezeichnet werden kann, in eine Kontaktausnehmung des Trägerelements eingebracht. Beispielsweise kann das Kontaktelement aus dem gleichen Material bestehen wie das Glaselement oder aus einem Material mit einer niedrigeren Schmelztemperatur als das Glaselement. Beispielsweise kann das Kontaktelement auch als Glaslotkörper, das heißt ein Formstück aus Glaslot, vorteilhaft ein niedrigschmelzendes Lotglas ausgebildet sein, wobei vorteilhafterweise ein stabiles Glaslot eingesetzt werden kann. Stabile Glaslote können sich im Gegensatz zu kristallisierenden Glasloten wie herkömmliche Gläser verhalten. Bei Wiedererhitzen der Lötstelle kann ihre Erweichung die gleiche Temperaturabhängigkeit wie beim vorhergegangenen Lötprozess zeigen. Vorteilhaft kann das Kontaktelement eine geringere Erweichungstemperatur aufweisen als das Glaselement. Im hier vorgestellten Verfahren wird ein solches oder ähnliches Kontaktelement zum Verbinden des Trägerelements mit dem Glaselement eingesetzt. Hierfür wird im Schritt des Aufsetzens das Glaselement auf den über die Oberfläche des Trägerelements ragenden Abschnitt des Kontaktelements beziehungsweise der Kontaktelmente, falls mehrere vorhanden sind, aufgesetzt, wobei ein Luftspalt zwischen der Oberfläche des Trägerelements und dem Glaselement bestehen bleibt. Das Glaselement kann somit im Schritt des lokalen Erhitzens allein über das Kontaktelement, oder, falls mehrere Kontaktelemente vorgesehen sind, über die Kontaktelemente mit dem Trägerelement stoffschlüssig verbunden werden. Vorteilhafterweise kann dadurch eine feste, stoffschlüssige und zugleich klebstofffreie Verbindung beispielsweise zwischen Glas und Keramik hergestellt werden. Dabei kann im Schritt des lokalen Erhitzens aufgeschmolzenes Material des Kontaktelements das Glaselement benetzen, um eine Verbindung im Sinne eines Lötprozesses zu bewerkstelligen. Auch ist es möglich, dass sich aufgeschmolzenes Material des Kontaktelements mit lokal aufgeschmolzenem Material des Glaselements verbindet, um eine Verbindung im Sinne eines Schweißprozesses zu bewerkstelligen. Falls mehrere Kontaktelemente vorgesehen sind, kann der Schritt des lokalen Erhitzens für jedes der Kontaktelemente nacheinander erfolgen. Alternativ ist es möglich, dass mehrere Kontaktelemente gelichzeitig lokal erhitzt werden, beispielsweise unter Verwendung mehrerer Laserstrahlen. Beim Schritt des lokalen Erhitzens können das Trägerelement und das Glaselement, mit Ausnahme der lokal erhitzten Stelle, Raumtemperatur aufweisen. Alternativ können beim Schritt des lokalen Erhitzens das Trägerelement und das Glaselement, mit Ausnahme der lokal erhitzten Stelle, eine vorbestimmte Temperatur aufweisen, welche der vorgesehenen Betriebstemperatur der fertigen Anordnung entsprechen kann.

Vorteilhaft können mehrere derartige Kontaktelemente, besonders vorteilhaft wenigstens drei, vorgesehen sein, die voneinander beabstandet angeordnet sind. Besonders vorteilhaft können mehr als zehn Kontaktelemente vorgesehen sein.

Gemäß einer Ausführungsform kann das Verfahren einen Schritt des Ausformens der Kontaktausnehmung vor dem Schritt des Einbringens aufweisen. Beispielsweise kann die Kontaktausnehmung in Form einer Grube im Schritt des Ausformens zum Beispiel durch eine Bohrung eingebracht werden. Alternativ kann das zum Beispiel aus Keramik ausgebildete Trägerelement bereits im Herstellungsprozess mit entsprechenden Ausnehmungen ausgeformt werden. Der Schritt des Ausformens hat den Vorteil, dass die Kontaktausnehmungen optimal auf das im nachfolgenden Schritt des Einbringens einzubringende Kontaktelement abgestimmt werden kann.

Das Verfahren umfasst einen Schritt des Beschichtens mindestens eines Teils der Kontaktausnehmung mit einer Trennlage vor dem Schritt des Einbringens. Beispielsweise kann die gesamte Oberfläche der Kontaktausnehmungen, in die im Schritt des Einbringens das Kontaktelement eingesetzt wird, mit der Trennlage beschichtet werden. Die Trennlage, die auch als Sperrschicht bezeichnet werden kann, kann zum Beispiel mit Silizium (Si) oder Germanium (Ge) oder einem Refraktärmetall und zusätzlich oder alternativ einem Oxid der genannten Stoffe und zusätzlich oder alternativ einem Refraktärmetallsilizid ausgebildet sein, um vorteilhafterweise das beispielsweise aus Siliziumcarbid ausgebildete Trägerelement chemisch vom Glas des Kontaktelements getrennt zu halten. Die Trennlage kann dazu vorgesehen sein, die Haftung zu verbessern und zusätzlich oder alternativ eine chemische Reaktion des Glaslots mit dem Trägerelement, die beispielsweise zu einem Aufschäumen des Glaslots beim Schmelzen desselben führen könnte, zu verhindern.

Gemäß einer weiteren Ausführungsform kann das Verfahren einen Schritt des Erwärmens des Kontaktelements aufweisen, um das Kontaktelement mit dem Trägerelement zu verbinden, wobei der Schritt des Erwärmens nach dem Schritt des Einbringens durchgeführt werden kann. Beispielsweise kann das Kontaktelement ähnlich einem Glaslot eingesetzt werden, das im Zuge einer Temperaturerhöhung eine stoffschlüssige Verbindung mit dem Trägerelement eingehen kann. Dabei kann das Kontaktelement zum Beispiel über die Schmelztemperatur des Kontaktelements, die auch Glastemperatur, Transformationstemperatur oder Erweichungstemperatur genannt werden kann, erwärmt werden, wobei das erweichte Glas das Trägerelement beziehungsweise die das Trägerelement bedeckende die Sperrschicht benetzen kann. Vorteilhaft können das Trägerelement und das Kontaktelement beziehungsweise alle vorgesehenen Kontaktelemente gemeinsam erwärmt werden. Der Schritt des Erwärmens kann beispielsweise als Ofenprozesses mit einem normalen Schmelzofen, beispielsweise ein Industrieofen mit Luft oder Schutzgas, oder einem Vakuumofen oder mittels Laserstrahl durchgeführt werden. Dabei kann das mit den vorgesehenen Kontaktelementen bestückte Trägerelement oder können gleich mehrere derartig mit Kontaktelementen bestückte Trägerelemente gemeinsam in den Ofen eingebracht werden. Alternativ kann der Schritt des Erwärmens des Kontaktelements, um das Kontaktelement mit dem Trägerelement zu verbinden, durch lokales Erwärmen erfolgen, wobei das Trägerelement im Übrigen bei Raumtemperatur bleibt. Vorteilhafterweise kann durch den in diesem Abschnitt beschriebenen Schritt des Erwärmens eine zeit- und kostengünstige Verbindung zwischen dem Trägerelement und dem Kontaktelement hergestellt werden. Vorteilhaft kann nach diesem Schritt das Trägerelement mit den verbundenen Kontaktelementen auf Raumtemperatur abgekühlt werden. Dann können hernach der Schritt des Reduzierens der Dicke des Abschnitts und zusätzlich oder alternativ der Schritt des Aufsetzens des Glaselements bei Raumtemperatur erfolgen.

Gemäß einer weiteren Ausführungsform kann im Schritt des Erwärmens der über die Oberfläche ragender Abschnitt des Kontaktelements als Kragen aufgeweitet und zusätzlich oder alternativ als eine in Richtung der Glasplattennormale hervorstehende abgerundete Kappe ausgeformt werden. Beispielsweise kann das Kontaktelement nach dem Schritt des Einbringens beispielsweise zu drei Vierteln im Trägerelement eingebracht sein, während ein Viertel über die Oberfläche des Trägerelements hinausragen kann. Im Schritt des Erwärmens kann das Kontaktelement insbesondere an dem über die Oberfläche ragenden Abschnitt erwärmt werden, wodurch der Abschnitt sich zu einem Kragen aufweiten kann und als Folge einen Radius aufweisen kann, der größer als ein Radius der Kontaktausnehmungen sein kann. Vorteilhafterweise kann dadurch eine stoffschlüssige Verbindung zwischen dem Kontaktelement und der Oberfläche des Trägerelements hergestellt werden. Zusätzlich oder alternativ kann der Abschnitt während des Erwärmens zu einer abgerundeten Kappe ausformen. Dabei kann vorteilhafterweise eine Ausdehnung des Radius des Kontaktelements über den Rand der Kontaktausnehmung hinaus vermieden oder eingeschränkt werden und gegebenenfalls die Verbindung zwischen dem Trägerelement und dem Glaselement lokal auf ein Minimum begrenzt werden.

Gemäß einer weiteren Ausführungsform kann das Verfahren einen Schritt des Reduzierens einer Dicke des Abschnitts vor dem Schritt des Aufsetzens umfassen. Beispielsweise kann der über die Oberfläche des Trägerelements ragende Abschnitt des Kontaktelements durch den vorangegangenen Schritt des Erwärmens zumindest teilweise geschmolzen sein, wodurch eine Kontaktoberfläche des Abschnitts Unregelmäßigkeiten aufweisen kann. Daher kann die Kontaktoberfläche des Abschnitts im Schritt des Reduzierens eingeebnet werden. Vorteilhafterweise kann im Schritt des Reduzierens ein solcher unregelmäßiger Abschnitt zum Beispiel mittels Abschleifens eingeebnet werden. Dabei kann ein Überstand des Kontaktelements beziehungsweise der Kontaktelemente über die Oberfläche des Trägerelements von vorteilhaft beispielsweise zwischen 10µm und 200µm erreicht werden. Dadurch kann hernach ein Spalt einer bestimmten Dicke zwischen dem Trägerelement und dem Glaselement bewirkt werden. Restliche Verformungen der Oberfläche der Kontaktelemente im Bereich bis zu einigen Mikrometern, zum Beispiel bis zu 0,1 µm, können zum Beispiel durch einen Schleif- und Polierprozess beseitigt werden. Vorteilhafterweise kann im Schritt des Reduzierens das Kontaktelement dermaßen bearbeitet werden, dass im anschließenden Schritt des Aufsetzens das Glaselement auf eine ebene Fläche aufgesetzt werden kann. Außerdem können, wenn mehrere Kontaktelemente vorgesehen sind, diese so eingeebnet werden, dass deren ebene Flächen in einer gemeinsamen Ebene liegen. Somit kann das Glaselement plan auf dem Kontaktelement, falls mehrere Kontaktelemente vorgesehen sind, auf den Kontaktelementen aufliegen. Dadurch können der Verbindungsprozess und zusätzlich oder alternativ die Festigkeit der späteren Verbindung zwischen Trägerelement und Glaselement optimiert werden. Die Ebenheit sowohl der eingeebneten Fläche jedes Kontaktelements sowie die Abweichung von der gemeinsamen Ebene können vorteilhaft weniger als 1µm betragen.

Gemäß einer weiteren Ausführungsform kann im Schritt des Einbringens das Kontaktelement unter Verwendung eines reaktiven Schweißprozesses eingebracht werden. Beispielsweise kann das reaktive Schweißen als Alternative zu einem zusätzlichen Schritt des Erwärmens durchgeführt werden, um vorteilhafterweise Zeit und Kosten einzusparen.

Gemäß einer weiteren Ausführungsform kann im Schritt des lokalen Erhitzens das Kontaktelement unter Verwendung eines Laserstrahls erhitzt werden. Beispielsweise kann im Schritt des lokalen Erhitzens ein punktuelles thermisches Verbindungsverfahren wie beispielsweise punktuelles Laserschweißen eingesetzt werden, wobei der Glasdübel (Kontaktelement) zum Beispiel durch das Glaselement hindurch lokal begrenzt mit einem Laserstrahl bestrahlt werden kann, um das Kontaktelement aufzuschmelzen und mit dem Glaselement zu verbinden. Dabei kann vorteilhafterweise das Kontaktelement bis über dessen Schmelztemperatur erhitzt werden, wobei das erweichte Glas des Glasdübels das Glaselement benetzen kann. Während des Verbindens des Glaselements mit dem Kontaktelement kann unter Verwendung eines Laserstrahls vorteilhafterweise die Temperatur des Trägerelements bei Raumtemperatur bleiben, um Verbiegungen bei einer anschließenden Abkühlung zur Raumtemperatur zu vermeiden. Beispielsweise kann die Verbindung des Glaselements mit dem Kontaktelement mittels Kurzimpuls erfolgen. Das hat den Vorteil, dass nur sehr lokal erhitzt wird und ein Erhitzen des gesamten Bauelements, wie beim Schweißen oder Löten oder Klebstofftempern, vermieden werden kann. Entsprechend ist der Einsatz von Laserschweißen besonders vorteilhaft, da mit dieser Methode mittels kurzer Laserimpulse eine lokal ausreichende Temperaturerhöhung für den Schweißvorgang bei gleichzeitig nahezu konstanter Temperatur des Trägerelements ermöglicht werden kann. Alternativ kann beispielsweise ein Laser eingesetzt werden, um einen Prozess des reaktiven Bondens zu starten.

Gemäß einer weiteren Ausführungsform kann im Schritt des Einbringens das Kontaktelement zylinderförmig oder kugelförmig oder teilkugelförmig oder ellipsoidförmig oder toroidförmig ausgeformt sein. Beispielsweise kann das Kontaktelement als Glaszylinder ausgeformt sein, der formangepasst in die Kontaktausnehmung des Trägerelements eingebracht und fest mit dem Trägerelement verbunden werden kann. Vorteilhafterweise kann ein solcher Zylinder oder eine der genannten Formen kostengünstig hergestellt und gelagert werden.

Gemäß einer weiteren Ausführungsform können im Schritt des lokalen Erhitzens das Glaselement und das Trägerelement verbunden werden, um eine optische Vorrichtung herzustellen. Beispielsweise kann die optische Vorrichtung als Teil einer Positioniereinrichtung, beispielsweise als ein Encoder beispielsweise für einen xy-Tisch (xy-stage) oder als ein Winkelencoder für ein Goniometer eingesetzt werden, wobei die stoffschlüssige Verbindung zwischen dem Trägerelement und dem Glaselement vorteilhafterweise den Einsatzbereich der optischen Vorrichtung erweitern und ihre Belastbarkeit erhöhen kann.

Gemäß einer weiteren Ausführungsform kann das Verfahren einen Schritt des Bereitstellens des Trägerelements in Form eines Keramikelements umfassen und zusätzlich oder alternativ des Bereitstellens des Glaselements in Form eines Ultra Low Expansion Glases und zusätzlich oder alternativ des Bereitstellens des Kontaktelements in Form eines Borosililkatglaselements. Beispielsweise kann das Trägerelement aus Siliziumcarbid (SiC) oder aus siliziuminflitriertem Siliziumkarbid (Si/SiC) ausgebildet sein, wodurch es vorteilhafterweise einen besonders hohen Härtegrad sowie hohe Temperaturbeständigkeit aufweisen kann. Das Glaselement kann als sogenanntes Ultra Low Expansion Glas vorteilhafterweise einen sehr kleinen Wärmeausdehnungskoeffizienten aufweisen und entsprechend in verschiedenen Vorrichtungen, zum Beispiel als Träger für große Teleskopspiegel in Spiegelteleskopen, eingesetzt werden. Dabei kann beispielsweise Borosilikatglas als Kontaktelement zum Verbinden eines Trägerelements mit dem Glaselement verwendet werden. Das Borosilikatglas kann zum Beispiel ähnlich einem Glaslot sowohl mit dem Trägerelement als auch mit dem Glaselement eine stoffschlüssige Verbindung eingehen. Dabei kann das Kontaktelement einen höheren thermischen Ausdehnungskoeffizienten als das Trägerelement aufweisen, wodurch es bei Temperaturveränderungen, zum Beispiel beim Abkühlen nach dem Verbinden des Kontaktelements mit dem Trägerelement, zu mechanischen Verspannungen kommen kann, die beispielsweise zum Abreißen des Kontaktelements vom Trägerelement führen könnten. Um mechanische Verspannungen auf ein unerhebliches Maß zu minimieren, können Kontaktelemente mit geringer Abmessung verwendet werden. Beispielsweise kann die größte lineare Abmessung jedes Kontaktelements weniger als 1mm betragen. Um die erforderliche Festigkeit der Verbindung des Glaselements mit dem Trägerelement zu gewährleisten, können entsprechend viele Kontaktelemente vorgesehen werden. Vorteilhaft kann das Kontaktelement einen geringeren thermischen Ausdehnungskoeffizienten aufweisen als das Trägerelement. Dann kann, insbesondere wenn ein zylinderförmiges Kontaktelement und eine zylinderförmige Ausnehmung des Trägerelements vorgesehen sind, zusätzlich zur stoffschlüssigen Verbindung eine Klemmwirkung des Kontaktelements im Trägerelement erreicht werden. Alternativ kann das Kontaktelement einen ähnlichen thermischen Ausdehnungskoeffizienten wie das Trägerelement aufweisen, wodurch es bei Temperaturveränderungen, zum Beispiel während eines Schweißprozesses oder während des Erwärmens des Kontaktelements, um das Kontaktelement mit dem Trägerelement zu verbinden, ähnliche Spannungsveränderungen erfahren kann wie das Trägerelement. Bei einem gemeinsamen Abkühlen auf Raumtemperatur von beispielsweise 20°C können das Kontaktelement und das Trägerelement mechanisch verspannungsfrei bleiben. Vorteilhafterweise kann bei der Verwendung von Borosilikatglas sowohl für das Trägerelement als auch für das Kontaktelement auf eine Trennlage verzichtet werden. Der thermische Ausdehnungskoeffizient kann für die Betrachtung in diesem Absatz jeweils als der Mittelwert zwischen der Erweichungstemperatur des Kontaktelements und Raumtemperatur angesetzt werden.

Gemäß einer weiteren Ausführungsform kann im Schritt des Einbringens eine Mehrzahl von Kontaktelementen in eine Mehrzahl von Kontaktausnehmungen in der Oberfläche des Trägerelements eingebracht werden. Dabei kann die Mehrzahl von Kontaktausnehmungen auf einer Linie angeordnet sein. Beispielsweise kann die Mehrzahl von Kontaktausnehmungen zum Beispiel in Form einer Liniennaht entlang einer geschlossenen Kurve, beispielsweise einem Kreis, oder entlang eines Rechteckform angeordnet sein. Vorteilhafterweise durch die Mehrzahl der eingebrachten Kontaktelemente die Stabilität der Verbindung erhöht werden.

Gemäß einer weiteren Ausführungsform kann im Schritt des lokalen Erhitzens zumindest zeitweise eine Andruckkraft auf das Glaselement ausgeübt werden, um das Glaselement gegen das Kontaktelement zu drücken. Beispielsweise kann ein mechanischer Druck zum Beispiel lokal oder vollflächig auf das Glaselement ausgeübt werden. Vorteilhafterweise kann ein Verbinden des Glaselements mit dem Kontaktelement dadurch beschleunigt werden. Außerdem kann sichergestellt werden, dass das Glaselement das Kontaktelement berührt. Dabei kann sichergestellt werden, dass im Schritt des lokalen Erhitzens aufgeschmolzenes Material des Kontaktelements das Glaselement benetzen kann. Nach einem Benetzen des Glaselements mit dem lokal aufgeschmolzenen Material des Kontaktelements kann die Andruckkraft reduziert oder aufgehoben werden, um eine mechanische Verspannung zu vermeiden,

Zudem wird eine optische Vorrichtung vorgestellt mit einem eine Kontaktausnehmung aufweisenden Trägerelement und einem Glaselement, wobei das Trägerelement und das Glaselement unter Verwendung eines in die Kontaktausnehmung eingebrachten Kontaktelements stoffschlüssig miteinander verbunden sind. Die optische Vorrichtung kann beispielsweise unter Verwendung einer Variante des zuvor beschriebenen Verfahrens hergestellt worden sein. Vorteilhafterweise kann eine solche optische Vorrichtung in Lichterzeugungsmaschinen (englisch: light engines) oder Sensormodulen wie beispielsweise optischen Encodern, oder anderen hochpräzisen optischen Modulen eingesetzt werden. Eine derartige Komponenteneinheit kann dort benötigt werden, um die erforderlichen Eigenschaften verbiegungsfrei beziehungsweise frei von einer thermischen Drift zu gewährleisten.

Gemäß einer Ausführungsform kann die optische Vorrichtung eine optische Sensoreinrichtung zum Erfassen von Längen und zusätzlich oder alternativ geometrischen Positionen aufweisen. Beispielsweise kann das Glaselement hierfür eine geometrische Maßverkörperung wie zum Beispiel Positionsmarken oder eine Maßstabmarkierung aufweist Vorteilhafterweise kann die optische Vorrichtung somit als sensorische Vorrichtung oder als Teil einer solchen, beispielsweise als Teil eines Encoders in einem xy-Tisch (xy-stage) oder als ein Winkelencoder für ein Goniometer eingesetzt werden.

Ausführungsbeispiele des hier vorgestellten Ansatzes sind in den Zeichnungen dargestellt und in der nachfolgenden Beschreibung näher erläutert. Es zeigt:
Fig. 1 ein Ablaufdiagramm eines Ausführungsbeispiels eines Verfahrens zum stoffschlüssigen Verbinden eines Glaselements mit einem Trägerelement;
Fig. 2 ein Ablaufdiagramm eines Ausführungsbeispiels eines Verfahrens zum stoffschlüssigen Verbinden eines Glaselements mit einem Trägerelement;
Fig. 3 eine schematische Darstellung eines Ausführungsbeispiels eines Trägerelements mit eingebrachtem Kontaktelement;
Fig. 4 eine schematische Darstellung eines Ausführungsbeispiels eines Trägerelements mit eingebrachtem Kontaktelement;
Fig. 5 eine schematische Darstellung eines Ausführungsbeispiels eines Trägerelements mit eingebrachtem Kontaktelement
Fig. 6 eine schematische Darstellung eines Ausführungsbeispiels eines Trägerelements mit aufgesetztem Glaselement;
Fig. 7 eine schematische Darstellung eines Ausführungsbeispiels eines Trägerelements mit aufgesetztem Glaselement;
Fig. 8 eine schematische Darstellung eines Ausführungsbeispiels optischen Vorrichtung; und
Fig. 9 eine schematische Draufsichtsdarstellung eines Ausführungsbeispiels eines Trägerelements mit einer Anordnung von einer Mehrzahl von Kontaktausnehmungen.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

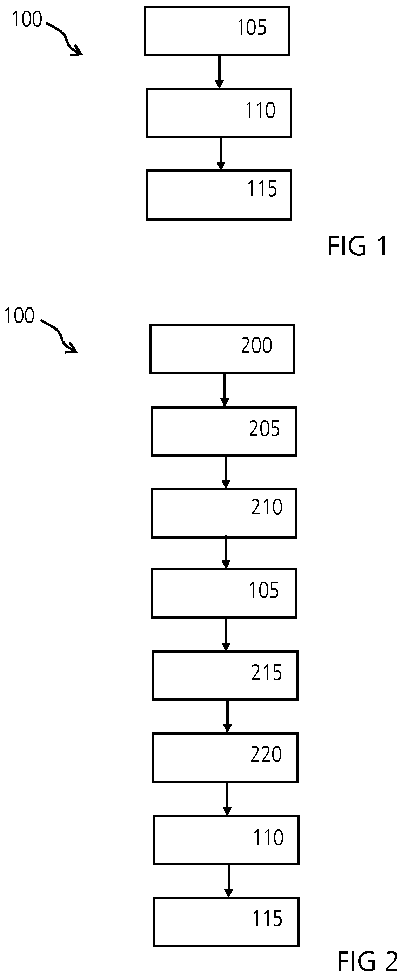

Fig. 1 zeigt ein Ablaufdiagramm eines Ausführungsbeispiels eines Verfahrens 100 zum stoffschlüssigen Verbinden eines Glaselements mit einem Trägerelement. Lediglich beispielhaft handelt es sich bei dem Trägerelement um einen Keramikträger aus siliziuminfiltriertem Siliziumcarbid (Si/SiC) und bei dem Glaselement um eine Glasplatte aus sogenanntem Ultra Low Expansion Glas. Das Si/SiC kann einen thermischen Ausdehnungskoeffizienten von lediglich beispielhaft 4 ppm/K zwischen Raumtemperatur und 1000°C aufweisen. Das Verfahren 100 umfasst einen Schritt 105 des Einbringens mindestens eines Kontaktelements in eine Kontaktausnehmung in einer Oberfläche des Trägerelements. In diesem Ausführungsbeispiel wird das Kontaktelement lediglich beispielhaft unter Verwendung eines reaktiven Schweißprozesses eingebracht. In einer Abwandlung des Ausführungsbeispiels kann ein Ofenprozess eingesetzt werden. Weiterhin umfasst das Verfahren 100 einen Schritt 110 des Aufsetzens des Glaselements auf einen über die Oberfläche des Trägerelements ragenden Abschnitt des Kontaktelements, wobei lediglich beispielhaft die Glasplatte parallel zur Oberfläche des Trägerelements ausgerichtet und mit dem Kontaktelement mechanisch in Kontakt gebracht wird. Dabei ergibt sich ein Luftspalt zwischen der Oberfläche des Trägerelements und dem Glaselement. Im folgenden Schritt 115 des lokalen Erhitzens wird das Kontaktelement erhitzt, um das Glaselement über das Kontaktelement mit dem Trägerelement zu verbinden. Dabei wird in diesem Ausführungsbeispiel die mechanische Verbindung des Glaselements und des Kontaktelements lediglich beispielhaft durch ein punktweises Verschweißen mittels eines Laserstrahls realisiert, wodurch mittelbar eine Verbindung des Glaselements zum Trägerelement entsteht. Der hierbei eingesetzte Laserstrahl ist lediglich beispielhaft auf Kurzimpulse für eine Dauer von beispielhaft 10 Nanosekunden eingestellt, um das Kontaktelement und das Glaselement lokal zu erhitzen. Durch den Einsatz von Kurzimpulsen wird ermöglicht, dass nur sehr lokal erhitzt wird und nicht, wie beim regulären Schweißen oder Löten oder Klebstofftempeln, das gesamte Bauelement erhitzt wird. Dabei wird in diesem Ausführungsbeispiel im Schritt des lokalen Erhitzens das Glaselement und das Trägerelement verbunden, um eine optische Vorrichtung herzustellen.

Fig. 2 zeigt ein Ablaufdiagramm eines Ausführungsbeispiels eines Verfahrens 100 zum stoffschlüssigen Verbinden eines Glaselements mit einem Trägerelement. Das hier dargestellte Verfahren 100 entspricht oder ähnelt dem in der vorangegangenen Figur beschriebenen Verfahren, mit dem Unterschied, dass hier dargestellte Verfahren 100 zusätzliche optionale Schritte umfasst.

In einem Ausführungsbeispiel weist das Verfahren 100 einen Schritt 200 des Bereitstellens des Trägerelements in Form eines Keramikelements und des Glaselements in Form eines Ultra Low Expansion Glases und des Kontaktelements in Form eines Borosililkatglaselements auf. Das Kontaktelement wird aus Borosilikatglas und das Trägerelements aus Si/SiC-Keramik ausgewählt. Dabei weist das Borosilikatglas in diesem Ausführungsbeispiel einen anderen thermischen Ausdehnungskoeffizienten zwischen einer Schweißtemperatur und Zimmertemperatur als das Trägerelement aus Si/SiC auf. Lediglich beispielhaft beträgt der thermische Ausdehnungskoeffizient des Borosilikatglases 3,25 ppm/K zwischen Raumtemperatur und 300°C und der des Si/SiC 4,0 ppm/K. Das Kontaktelement weist in diesem Ausführungsbeispiel relativ geringe Abmessungen auf, damit der thermische Ausdehnungsunterschied nicht zum Abreißen des Kontaktelements vom Trägerelement beim Abkühlen führt.

Auf den Schritt 200 des Bereitstellens erfolgt in einem Ausführungsbeispiel ein Schritt 205 des Ausformens der Kontaktausnehmung. Dabei wird die Kontaktausnehmung lediglich beispielhaft mittels Bohrung und abgestimmt auf die Ausmaße des Kontaktelements in das Trägerelement eingebracht.

Im Anschluss des Ausformens wird in einem Ausführungsbeispiel im anschließenden Schritt 210 des Beschichtens die Kontaktausnehmung mit einer Trennlage beschichtet. Lediglich beispielhaft ist die Trennlage, die auch als Sperrschicht bezeichnet werden kann, in diesem Ausführungsbeispiel mit Silizium ausgebildet, um das Trägerelement chemisch von dem Kontaktelement zu trennen. In einem anderen Ausführungsbeispiel kann die Trennlage beispielsweise zusätzlich oder alternativ Germanium (Ge) oder ein Refraktärmetall oder ein Oxid der genannten Stoffe und zusätzlich oder alternativ ein Refraktärmetallsilizid aufweisen. In diesem Ausführungsbeispiel folgt erst auf den Schritt 210 des Beschichtens der Schritt 105 des Einbringens des Kontaktelements in die beschichtete Kontaktausnehmung des Trägerelements. In einem Ausführungsbeispiel können im Schritt des Ausformens auch eine Mehrzahl von Kontaktausnehmungen in der Oberfläche des Trägerelements ausgeformt werden, in die im Schritt des Einbringens eine Mehrzahl von Kontaktelementen eingebracht werden können. Dabei kann die Mehrzahl von Kontaktausnehmungen auf einer Linie angeordnet sein. Beispielsweise kann die Mehrzahl von Kontaktausnehmungen zum Beispiel in Form einer Liniennaht entlang einer geschlossenen Kurve, beispielsweise einem Kreis, oder entlang eines Rechteckform angeordnet sein.

Nach dem Schritt 105 des Einbringens folgt in einem Ausführungsbeispiel ein Schritt 215 des Erwärmens des Kontaktelements, um das Kontaktelement mit dem Trägerelement zu verbinden. Dabei wird lediglich beispielhaft das Kontaktelement und optional auch das Trägerelement auf eine Verbindungstemperatur erhitzt, die eine stoffschlüssige Verbindung zwischen dem Kontaktelement und dem Trägerelement ermöglicht. Lediglich beispielhaft wird der Schritt 215 des Erwärmens als Ofenprozesses mit einem normalen Schmelzofen durchgeführt. In einem anderen Ausführungsbeispiel kann das Erwärmen auf unter Verwendung eines Vakuumofens oder mittels Laserstrahl durchgeführt werden. In diesem Ausführungsbeispiel wird durch das Erwärmen ein über die Oberfläche des Trägerelements ragender Abschnitt des Kontaktelements als Kragen aufgeweitet, in dem er lediglich beispielhaft zum Schmelzen gebracht wird. Anschließend wird das Bauteil in diesem Ausführungsbeispiel abgekühlt, um das Kontaktelement dauerhaft mit dem Trägerelement zu verbinden. Da das Borosilikatglaselement und das Si/SiC-Keramikelement in diesem Ausführungsbeispiel verschiedene thermische Ausdehnungskoeffizienten aufweisen, kann der Schritt 215 des Erwärmens einschließlich eines Abkühlens auf lediglich beispielhaft eine Zimmertemperatur von beispielhaft 20 °C dennoch im wesentlichen mechanisch spannungsarm durchgeführt werden, indem Kontaktelemente von kleiner Abmessung verwendet werden. In einem anderen Ausführungsbeispiel können mechanische Spannungen beziehungsweise Unebenheiten durch Löten hervorgerufen werden. Beim Löten kann beispielsweise das gesamte Bauteil auf die Löttemperatur erhitzt werden. Beim Abkühlen auf Raumtemperatur kann die Fügeposition an der Erstarrungstemperatur des Lotes fixiert werden, so dass bei unterschiedlichen Ausdehnungskoeffizienten der verlöteten Teile eine thermisch induzierte Spannung durch die Abkühlung entsteht, die zur Verbiegung der Oberfläche führen kann. Der Effekt ist äquivalent zum Kleben, wobei die Erstarrungstemperatur des Lotes der Glasübergangstemperatur des Klebstoffs entsprechen kann.

In einem Ausführungsbeispiel folgt in dem hier gezeigten Verfahren 100 auf dem Schritt 215 des Erwärmens ein Schritt 220 des Reduzierens. Dabei wird lediglich beispielhaft eine Dicke des über die Oberfläche des Trägerelements ragenden Abschnitts des abgekühlten Kontaktelement abgeschliffen und poliert, wodurch sich eine plane Oberfläche des Kontaktelements ergibt. Dabei werden eventuelle restliche Deformationen der Oberfläche des Kontaktelements beseitigt. In einem Ausführungsbeispiel mit einer Mehrzahl von Kontaktelementen können außerdem die Oberflächen mehrerer vorhandener Kontaktelemente in eine gemeinsame Ebene eingeebnet werden. Lediglich beispielhaft wird dabei eine Ebenheit unter 1 µm erreicht. Auf dieser dem Trägerelement abgewandten planen Oberfläche wird im folgenden Schritt 110 des Aufsetzens das Glaselement aufgesetzt.

Im Anschluss folgt der Schritt 115 des lokalen Erhitzens, um das Glaselement über das Kontaktelement mit dem Trägerelement zu verbinden. Dabei wird in diesem Ausführungsbeispiel der Schritt 115 des lokalen Erhitzens unter Verwendung eines Laserstrahls durchgeführt. Hierbei wird der Laserstrahl lediglich beispielhaft über die Oberfläche des Kontaktelements geführt, um das Kontaktelement sicher mit dem Glaselement zu verbinden. Zugleich wird lediglich beispielhaft in diesem Schritt 115 des lokalen Erhitzens eine Andruckkraft auf das Glaselement ausgeübt, um das Glaselement gegen das Kontaktelement zu drücken. Die Andruckkraft kann ganzflächig ausgeübt werden, indem beispielsweise ein weiteres Glaselement auf das Glaselement aufgelegt wird, oder nur lokal im Bereich des oder der Kontaktelemente. Das Glaselement weist in diesem Ausführungsbeispiel einen geringeren thermischen Ausdehnungskoeffizienten als das Trägerelement auf, was allerdings wegen der punktförmigen, nur durch lokales Erwärmen hergestellten Verbindung zwischen dem Glaselement und dem Trägerelement zu keiner mechanischen Verspannung führt.

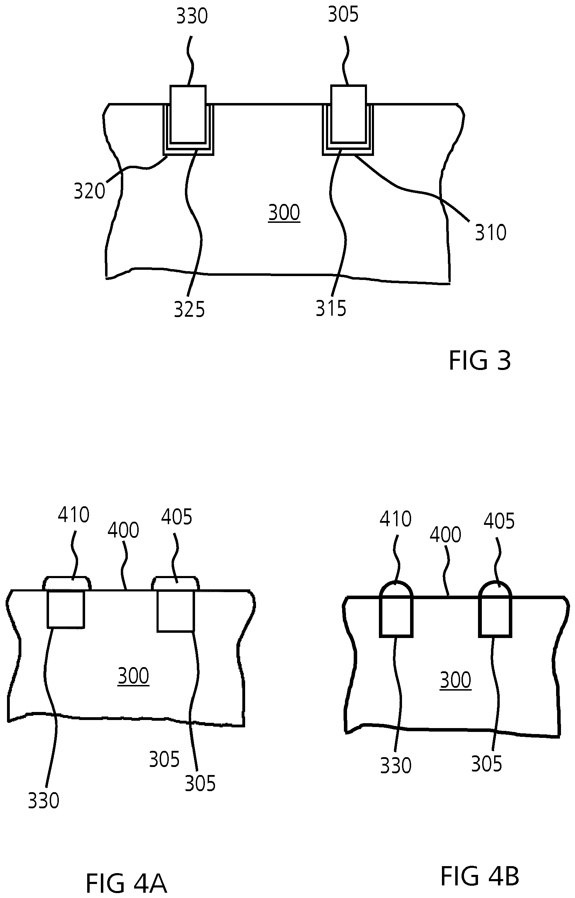

Fig. 3 zeigt eine schematische Darstellung eines Ausführungsbeispiels eines Trägerelements 300 mit eingebrachtem Kontaktelement 305. Lediglich beispielhaft handelt es sich bei dem Trägerelement um ein Element aus Si/SiC-Keramik und bei dem Kontaktelement 305 um ein zylinderförmiges Element aus Borosilikatglas, das auch als Glaslot bezeichnet werden kann. In einem anderen Ausführungsbeispiel kann das Kontaktelement auch kugelförmig oder teilkugelförmig oder ellipsoidförmig oder toroidförmig ausgeformt sein. In diesem Ausführungsbeispiel ist das zylinderförmige Kontaktelement 305 der Form der Kontaktausnehmung 310 angepasst, in der das Kontaktelement 305 eingebracht ist. Dabei ist die Kontaktausnehmung 310 in diesem Ausführungsbeispiel mit einer Trennlage 315 beschichtet, um das Kontaktelement 305 chemisch von dem Trägerelement 300 zu trennen. In diesem Ausführungsbeispiel umfasst das Trägerelement 300 zudem eine weitere Kontaktausnehmung 320 die mit einer weiteren Trennlage 325 beschichtet ist und in der ein weiteres Kontaktelement 330 eingebracht ist. Dabei ist das weitere Kontaktelement 330 äquivalent zu dem Kontaktelement 305 ausgebildet.

Fig. 4A und Fig. 4B zeigen eine schematische Darstellung eines Ausführungsbeispiels eines Trägerelements 300 mit eingebrachtem Kontaktelement 305. Das hier dargestellte Trägerelement 300 und das Kontaktelement 305 entsprechen oder ähneln dem in der vorangegangenen Figur 3 beschriebenen Trägerelement und Kontaktelement. Dabei sind unterschiedliche Ausformungsmöglichkeiten des Kontaktelements in den Teilfiguren 4A und 4B verdeutlicht. In beiden Teilfiguren 4A und 4B umfasst das Trägerelement 300 auch in diesem Ausführungsbeispiel neben dem in der Kontaktausnehmung 310 angeordnetem Kontaktelement 305 ein in einer weiteren Kontaktausnehmung 320 eingebrachtes weiteres Kontaktelement 330. Das Kontaktelement 305 sowie das weitere Kontaktelement 330 sind in der hier gezeigten Abbildung nach einem Schritt des Erwärmens dargestellt. Dabei ist in der Teilfigur 4A aufgrund des Erwärmens in diesem Ausführungsbeispiel ein über die Oberfläche 400 des Trägerelements 300 ragender Abschnitt 405 des Kontaktelements 305 als Kragen aufgeweitet und stoffschlüssig mit der Oberfläche 400 verbunden. Entsprechend ist ein weiterer Abschnitt 410 des weiteren Kontaktelements 330 ebenfalls aufgeweitet und stoffschlüssig mit der Oberfläche 400 verbunden. In der Teilfigur 4B hingegen sind sowohl der Abschnitt 405 des Kontaktelements 305 als auch der weitere Abschnitt 410 des weiteren Kontaktelements 330 als abgerundete Kappe ausgeformt. Mit anderen Worten sind die beiden Dübel in dem hier dargestellten Ausführungsbeispiel eingeschmolzen und fest mit dem Trägerelement 300 verbunden.

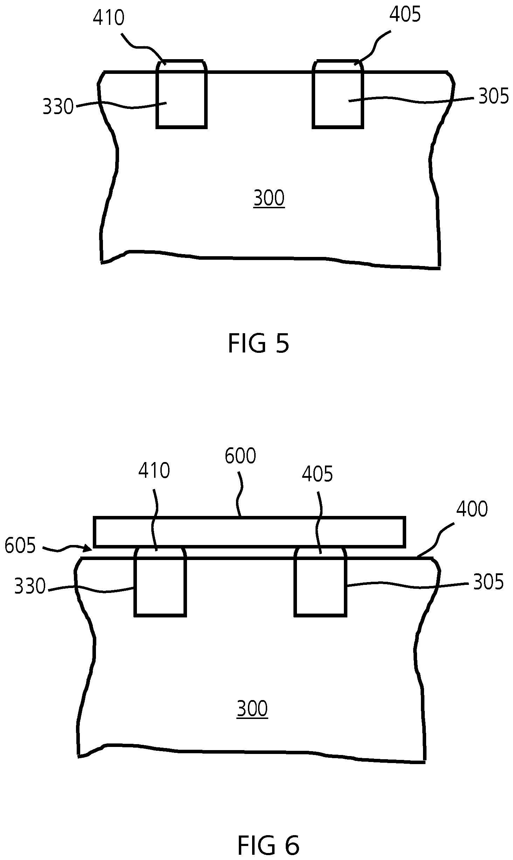

Fig. 5 zeigt eine schematische Darstellung eines Ausführungsbeispiels eines Trägerelements 300 mit eingebrachtem Kontaktelement 305. Das hier dargestellte Trägerelement 300 und das Kontaktelement 305 entsprechen oder ähneln dem in den vorangegangenen Figuren 3 und 4 beschriebenen Trägerelement und Kontaktelement, wobei das Trägerelement 305 auch in diesem Ausführungsbeispiel neben dem Kontaktelement 305 ein weiteres Kontaktelement 330 aufweist. In der hier gezeigten Darstellung sind das Kontaktelement 305 und das weitere Kontaktelement 330 nach einem Schritt des Reduzierens gezeigt, wie er in der vorangegangenen Figur 2 beschrieben wurde. Entsprechend ist der Abschnitt 405 des Kontaktelements 305 ebenso wie der weitere Abschnitt 410 des weiteren Kontaktelements 330 abgeflacht um eine Aufnahme des Glaselements zu optimieren.

Fig. 6 zeigt eine schematische Darstellung eines Ausführungsbeispiels eines Trägerelements 300 mit aufgesetztem Glaselement 600. Das hier dargestellte Trägerelement 300 entspricht oder ähnelt dem in den vorangegangenen Figuren 3, 4 und 5 beschriebenen Trägerelement. In dem Trägerelement 300 sind Kontaktelemente 305, 330 angeordnet, die in einem vorangegangenen Schritt des Erwärmens eingeschmolzen und in einem Schritt des Reduzierens eingeebnet wurden. Auf den über die Oberfläche 400 des Trägerelements 300 ragenden Abschnitten 405, 410 der Kontaktelemente 305, 330 ist in der hier gezeigten Darstellung ein Glaselement 600 aufgesetzt. Bei dem Glaselement 600, das auch als Glaschip oder Glasplatte bezeichnet werden kann, handelt es sich lediglich beispielhaft um ein sogenanntes Ultra Low Expansion Glas, das einen sich vom Ausdehnungskoeffizienten des Trägerelements 300 unterscheidenden Ausdehnungskoeffizienten aufweist. Dabei ist das Glaselement parallel zur Oberfläche 400 des Trägerelements 300 ausgerichtet. Durch die Dicke der Abschnitte 405, 410 ergibt sich dabei zwischen dem Trägerelement 300 und dem Glaselement 600 ein Luftspalt 605.

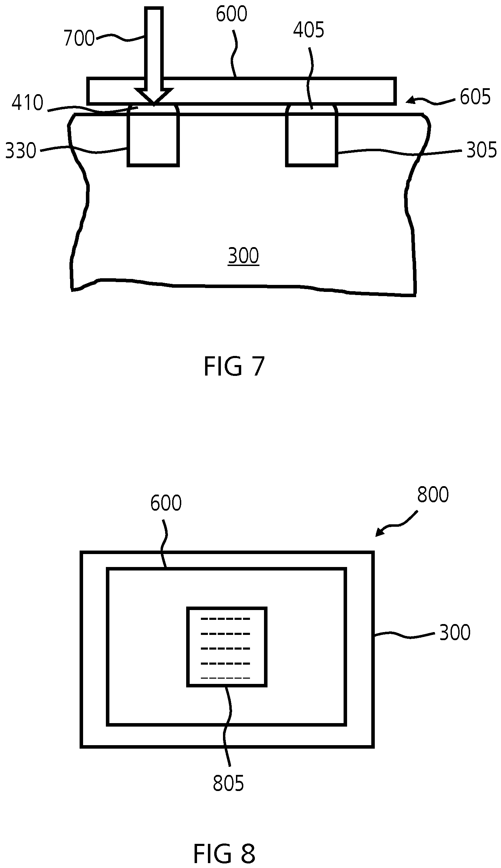

Fig. 7 zeigt eine schematische Darstellung eines Ausführungsbeispiels eines Trägerelements 300 mit aufgesetztem Glaselement 600. Das hier dargestellte Trägerelement 300 und das Glaselement 600 entsprechen oder ähneln dem in der vorangegangenen Figur 6 beschriebenen Trägerelement und Glaselement. Dabei sind das Trägerelement 300, die Kontaktelemente 305, 330 und das Glaselement 600 während eines Schrittes des lokalen Erhitzens dargestellt. Die Abschnitte 405, 410 fungieren hierbei als Fügefläche zum anfügen das Glaselements 600. Dabei ist ein Laserstrahl 700 durch das Glaselement 600 auf das weitere Kontaktelement 330 gerichtet, um dieses lokal zu erhitzen. Entsprechend wird das Kontaktelement 305 mit einem weiteren Laserstrahl oder anschließend mittels des neu ausgerichteten Laserstrahls 700 erhitzt. Durch das Erhitzen der mit dem Trägerelement 300 verbundenen Kontaktelemente 305, 330 ist das Glaselement 600 mittelbar mit dem Trägerelement 300 verbindbar, wobei der Luftspalt 605 zwischen dem Trägerelement 300 und dem Glaselement 600 bestehen bleibt. Während des lokalen Erhitzens wird das Glaselement 600 gemäß einem Ausführungsbeispiel auf die Kontaktelemente 305, 330 aufgepresst.

Fig. 8 zeigt eine schematische Draufsichtsdarstellung eines Ausführungsbeispiels optischen Vorrichtung 800. Die optische Vorrichtung 800 umfasst in diesem Ausführungsbeispiel ein Trägerelement 300, das dem in den vorangegangenen Figuren 3, 4, 5, 6 und 7 beschriebenen Trägerelement entspricht oder ähnelt. Das Trägerelement 300 der Vorrichtung 800 ist mittels eines Verfahrens, wie es in den vorangegangenen Figuren 1 und 2 beschrieben wurde, mit einem Glaselement 600 stoffschlüssig verbunden. An dem Glaselement 600 ist in diesem Ausführungsbeispiel eine Sensoreinrichtung 805 angeordnet, bei der es sich lediglich beispielhaft um Positionsmarken zum Bestimmen einer geometrischen Position handelt. Lediglich beispielhaft handelt es sich bei der optischen Vorrichtung 800 um einen xy- Encoder.

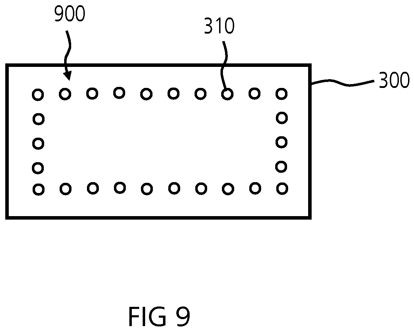

Fig. 9 zeigt eine schematische Draufsichtsdarstellung eines Ausführungsbeispiels eines Trägerelements 300 mit einer Anordnung 900 von einer Mehrzahl von Kontaktausnehmungen 310. Das hier dargestellte Trägerelement 300 entspricht oder ähnelt dem in den vorangegangenen Figuren 3, 4, 5, 6, 7 und 8 beschriebenen Trägerelement und weist eine Mehrzahl von Kontaktausnehmungen auf, die alle der in den vorangegangenen Figuren 3, 4 und 6 beschriebenen Kontaktausnehmung gleichen. Die Anordnung 900 umfasst in diesem Ausführungsbeispiel mehr als zwanzig, beispielhaft 26 Kontaktausnehmungen 310 und ist lediglich beispielhaft rechteckig ausgeformt. In einem anderen Ausführungsbeispiel können beispielsweise zwanzig oder mehr Kontaktausnehmungen 310 entlang mehrerer Ringe angeordnet sein. Dabei kann ein innerer Ring beispielsweise einen Durchmesser von 20 mm aufweisen, ein mittlerer Ring einen Durchmesser von 40 mm und ein äußerer Ring einen Durchmesser von 60 mm.

## Patentansprüche

1. Verfahren (100) zum stoffschlüssigen Verbinden eines Glaselements (600) mit einem Trägerelement (300), wobei das Verfahren (100) folgende Schritte (105, 110, 115) umfasst:
Einbringen (105) mindestens eines Kontaktelements (305) in eine Kontaktausnehmung (310) in einer Oberfläche (400) des Trägerelements (300);
Aufsetzen (110) des Glaselements (600) auf einen über die Oberfläche (400) ragenden Abschnitt (405) des Kontaktelements (305); und
lokales Erhitzen (115) des Kontaktelements (305), um das Glaselement (600) über das Kontaktelement (305) mit dem Trägerelement (300) zu verbinden;
wobei das Verfahren (100) außerdem einen Schritt (210) des Beschichtens mindestens eines Teils der Kontaktausnehmung (310) mit einer Trennlage (315) vor dem Schritt (105) des Einbringens umfasst.

2. Verfahren (100) gemäß Anspruch 1, mit einem Schritt (205) des Ausformens der Kontaktausnehmung (310) vor dem Schritt (105) des Einbringens.

3. Verfahren (100) gemäß einem der vorangegangenen Ansprüche, **dadurch gekennzeichnet, dass** die Trennlage (315) aus Silizium (Si) oder Germanium (Ge) oder einem Refraktärmetall oder einem Oxid der genannten Stoffe oder einem Refraktärmetallsilizid ausgebildet ist.

4. Verfahren (100) gemäß einem der vorangegangenen Ansprüche, mit einem Schritt (215) des Erwärmens des Kontaktelements (305), um das Kontaktelement (305) mit dem Trägerelement (300) zu verbinden, wobei der Schritt (215) des Erwärmens nach dem Schritt (105) des Einbringens durchgeführt wird.

5. Verfahren (100) gemäß Anspruch 4, wobei im Schritt (215) des Erwärmens der über die Oberfläche (400) ragender Abschnitt (405) des Kontaktelements (305) als Kragen aufgeweitet und/oder als eine in Richtung der Glasplattennormale hervorstehende abgerundete Kappe ausgeformt wird.

6. Verfahren (100) gemäß einem der vorangegangenen Ansprüche, mit einem Schritt (220) des Reduzierens einer Dicke des Abschnitts (405) vor dem Schritt (110) des Aufsetzens, um eine Kontaktoberfläche des Abschnitts (405) einzuebnen.

7. Verfahren (100) gemäß einem der vorangegangenen Ansprüche, wobei im Schritt (105) des Einbringens das Kontaktelement (305) unter Verwendung eines reaktiven Schweißprozesses eingebracht wird.

8. Verfahren (100) gemäß einem der vorangegangenen Ansprüche, wobei im Schritt (115) des lokalen Erhitzens das Kontaktelements (305) unter Verwendung eines Laserstrahls (700) erhitzt wird.

9. Verfahren (100) gemäß einem der vorangegangenen Ansprüche, wobei im Schritt (105) des Einbringens das Kontaktelement (305) zylinderförmig oder kugelförmig oder teilkugelförmig oder ellipsoidförmig oder toroidförmig ausgeformt ist.

10. Verfahren (100) gemäß einem der vorangegangenen Ansprüche, wobei im Schritt (115) des lokalen Erhitzens das Glaselement (600) und das Trägerelement (300) verbunden werden, um eine optische Vorrichtung (600) herzustellen.

11. Verfahren (100) gemäß einem der vorangegangenen Ansprüche, mit einem Schritt (200) des Bereitstellens des Trägerelements (300) in Form eines Keramikelements und/oder des Glaselements (600) in Form eines Ultra Low Expansion Glases und/oder des Kontaktelements (305) in Form eines Borosililkatglaselements.

12. Verfahren (100) gemäß einem der vorangegangenen Ansprüche, wobei im Schritt (105) des Einbringens eine Mehrzahl von Kontaktelementen (305) in eine Mehrzahl von Kontaktausnehmungen (310) in der Oberfläche (400) des Trägerelements (300) eingebracht werden, wobei die Mehrzahl von Kontaktausnehmungen (310) auf einer Linie angeordnet sind.

13. Verfahren (100) gemäß einem der vorangegangenen Ansprüche, wobei im Schritt (115) des lokalen Erhitzens eine Andruckkraft auf das Glaselement (600) ausgeübt wird, um das Glaselement (600) gegen das Kontaktelement (305) zu drücken.

14. Optische Vorrichtung (800) mit einem eine Kontaktausnehmung (310) aufweisenden Trägerelement (300) bestehend aus Siliziumcarbid (SiC), oder Diamant oder einem Gemisch aus Silizium und Siliziumkarbid (Si/SiC), insbesondere einem reaktionsgebundenen, siliziuminfiltrierten Siliziumkarbidmaterial, oder aus Borkarbid (B₄C) oder aus siliziuminfiltriertem Borkarbid (Si/B₄C) oder aus AlN und einem Glaselement (600), wobei das Trägerelement (300) und das Glaselement (600) unter Verwendung eines in die Kontaktausnehmung (310) eingebrachten aus einem Glas gebildeten Kontaktelements (305) stoffschlüssig miteinander verbunden sind, wobei die Kontaktausnehmung (310) mit einer Trennlage (315) beschichtet ist.

15. Optische Vorrichtung (800) gemäß Anspruch 14, mit einer optischen Sensoreinrichtung (805) zum Erfassen von Längen und/oder geometrischen Positionen.

## Claims

1. A method (100) of integrally bonding a glass element (600) to a carrier element (300), wherein the method (100) comprises the following steps (105, 110, 115):
inserting (105) at least one contact element (305) into a contact recess (310) in a surface (400) of the carrier element (300);
placing (110) the glass element (600) on a portion (405) of the contact element (305) projecting above the surface (400); and
local heating (115) of the contact element (305) in order to connect the glass element (600) to the carrier element (300) via the contact element (305);
wherein the method (100) further comprises a step (210) of coating at least a part of the contact recess (310) with a separating layer (315) prior to the step (105) of insertion.

2. The method (100) according to claim 1, comprising a step (205) of molding the contact recess (310) prior to the step (105) of insertion.

3. The method (100) according to any of the preceding claims, **characterized in that** the separating layer (315) is designed from silicon (Si) or germanium (Ge) or a refractory metal or an oxide of said substances or a refractory metal silicide.

4. The method (100) according to any of the preceding claims, comprising a step (215) of heating the contact element (305) to connect the contact element (305) to the carrier element (300), wherein the step (215) of heating is performed after the step (105) of insertion.

5. The method (100) according to claim 4, wherein in the step (215) of heating the portion (405) of the contact element (305) protruding above the surface (400) is widened as a collar and/or formed as a rounded cap protruding in the direction of the glass plate normal.

6. The method (100) according to any of the preceding claims, comprising a step (220) of reducing a thickness of the portion (405) prior to the step (110) of placing, for leveling a surface of the portion (405).

7. The method (100) according to any of the preceding claims, wherein in the step (105) of insertion, the contact element (305) is inserted using a reactive welding process.

8. The method (100) according to any of the preceding claims, wherein in the step (115) of locally heating the contact element (305) is heated using a laser beam (700).

9. The method (100) according to any of the preceding claims, wherein in the step (105) of insertion the contact element (305) is shaped cylindrical or spherical or partially spherical or ellipsoidal or toroidal.

10. The method (100) according to any of the preceding claims, wherein in the step (115) of local heating, the glass element (600) and the support element (300) are joined to produce an optical device (600).

11. The method (100) according to any of the preceding claims, comprising a step (200) of providing the carrier element (300) in the form of a ceramic element and/or the glass element (600) in the form of an ultra low expansion glass and/or the contact element (305) in the form of a borosilicate glass element.

12. The method (100) according to any of the preceding claims, wherein in the step (105) of insertion, a plurality of contact elements (305) are inserted into a plurality of contact recesses (310) in the surface (400) of the carrier element (300), wherein the plurality of contact recesses (310) are arranged on a line.

13. The method (100) according to any of the preceding claims, wherein in the step (115) of local heating, a pressing force is exerted on the glass element (600) to press the glass element (600) against the contact element (305).

14. An optical device (800) having a carrier element (300) consisting of silicon carbide (SiC) or diamond or a mixture of silicon and silicon carbide (Si/SiC) and having a contact recess (310), particularly a reaction-bonded, silicon-infiltrated silicon carbide material, or of boron carbide (B₄C) or of silicon-infiltrated boron carbide (Si/B₄C) or of AIN and a glass element (600), wherein the carrier element (300) and the glass element (600) are firmly connected to one another using a contact element (305) formed from a glass and inserted into the contact recess (310), wherein the contact recess (310) is coated with a separating layer (315).

15. The optical device (800) according to claim 14, comprising an optical sensor apparatus (805) for detecting lengths and/or geometric positions.

## Revendications

1. Procédé (100) pour l'assemblage par liaison de matière d'un élément en verre (600) avec un élément de support (300), le procédé (100) comprenant les étapes (105, 110, 115) suivantes :
introduction (105) d'au moins un élément de contact (305) dans un évidement de contact (310) dans une surface (400) de l'élément de support (300) ;
pose (110) de l'élément en verre (600) sur une partie (405), dépassant la surface (400), de l'élément de contact (305) ; et
chauffage local (115) de l'élément de contact (305), afin d'assembler l'élément en verre (600) au-dessus de l'élément de contact (305) avec l'élément de support (300) ;
le procédé (100) comprenant en outre une étape (210) consistant à revêtir au moins une partie de l'évidement de contact (310) avec une couche de séparation (315) avant l'étape (105) de l'introduction.

2. Procédé (100) selon la revendication 1, comportant une étape (205) consistant à façonner l'évidement de contact (310) avant l'étape (105) de l'introduction.

3. Procédé (100) selon l'une quelconque des revendications précédentes, **caractérisé en ce que** la couche de séparation (315) est constituée de silicium (Si) ou de germanium (Ge) ou d'un métal réfractaire ou d'un oxyde des matières citées ou d'un siliciure de métal réfractaire.

4. Procédé (100) selon l'une quelconque des revendications précédentes, comportant une étape (215) consistant à chauffer l'élément de contact (305) afin d'assembler l'élément de contact (305) avec l'élément de support (300), l'étape (215) du chauffage étant effectuée après l'étape (105) de l'introduction.

5. Procédé (100) selon la revendication 4, dans lequel, dans l'étape (215) du chauffage, la partie (405), faisant saillie au-dessus de la surface (400), de l'élément de contact (305) s'élargit en collerette et/ou est façonnée sous forme d'un chapeau arrondi faisant saillie en direction de la normale de la plaque de verre.

6. Procédé (100) selon l'une quelconque des revendications précédentes, comportant une étape (220) consistant à réduire une épaisseur de la partie (405) avant l'étape (110) de la pose, afin d'aplanir une surface de contact de la partie (405).

7. Procédé (100) selon l'une quelconque des revendications précédentes, dans lequel, dans l'étape (105) de l'introduction, l'élément de contact (305) est introduit à l'aide d'un processus de soudure.

8. Procédé (100) selon l'une quelconque des revendications précédentes, dans lequel, dans l'étape (115) du chauffage local, l'élément de contact (305) est chauffé à l'aide d'un faisceau laser (700).

9. Procédé (100) selon l'une quelconque des revendications précédentes, dans lequel, dans l'étape (105) de l'introduction, l'élément de contact (305) est façonné en forme cylindrique ou sphérique ou partiellement sphérique ou ellipsoïdale ou toroïdale.

10. Procédé (100) selon l'une quelconque des revendications précédentes, dans lequel, dans l'étape (115) du chauffage local, l'élément en verre (600) et l'élément de support (300) sont assemblés afin de produire un dispositif optique (600).

11. Procédé (100) selon l'une quelconque des revendications précédentes, comportant une étape (200) de la fourniture de l'élément de support (300) sous forme d'un élément céramique et/ou de l'élément en verre (600) sous forme d'un verre Ultra Low Expansion et/ou de l'élément de contact (305) sous forme d'un élément en verre borosilicate.

12. Procédé (100) selon l'une quelconque des revendications précédentes, dans lequel, dans l'étape (105) de l'introduction, une pluralité d'éléments de contact (305) sont introduits dans une pluralité d'évidements de contact (310) dans la surface (400) de l'élément de support (300), le pluralité d'évidements de contact (310) étant disposés sur une ligne.

13. Procédé (100) selon l'une quelconque des revendications précédentes, dans lequel, dans l'étape (115) du chauffage local, une force de pression est exercée sur l'élément en verre (600), afin de presser l'élément en verre (600) contre l'élément de contact (305) .

14. Dispositif optique (800) comportant un élément de support (300) présentant un évidement de contact (310), constitué de carbure de silicium (SiC) ou de diamant ou d'un mélange de silicium et carbure de silicium (Si/SiC), en particulier d'une matière de carbure de silicium infiltrée de silicium, liée par réaction, ou de carbure de bore (B₄C) ou de carbure de bore infiltré de silicium (Si/B₄C) ou d'AlN et d'un élément en verre (600), l'élément de support (300) et l'élément en verre (600) étant assemblés l'un avec l'autre par liaison de matière avec utilisation d'un élément de contact (305) constitué de verre, introduit dans l'évidement de contact (310),l'évidement de contact (310) étant revêtu d'une couche de séparation (315).

15. Dispositif optique (800) selon la revendication 14, comportant un dispositif capteur (805) destiné à la détection de longueurs et/ou de positions géométriques.
